# EUROPÄISCHE PATENTSCHRIFT

(11) **EP 3 034 382 B1**
(45) Veröffentlichungstag und Bekanntmachung des Hinweises auf die Patenterteilung: **20.06.2018**
(21) Anmeldenummer: 14197862.7
(22) Anmeldetag: 15.12.2014
(51) Int. Cl.: B62H 5/00, B62K 19/36

(54) **Vorrichtung zum Halten einer Stütze an einem Trägergestell**
Device for holding a support on a supporting assembly
Dispositif destiné à maintenir un support sur un bâti de support

(43) Veröffentlichungstag der Anmeldung: 22.06.2016
(73) Patentinhaber: Schulz, Markus, 66111 Saarbrücken (DE)
(72) Erfinder: Schulz, Markus, 66111 Saarbrücken (DE)
(74) Vertreter: Patentanwälte Bernhardt / Wolff Partnerschaft mbB

(56) Entgegenhaltungen:
- EP-A2- 1 298 046
- DE-A1- 4 410 523
- DE-A1-102004 009 927
- DE-A1-102013 106 273

## Beschreibung

Die Erfindung betrifft eine Vorrichtung zum Halten einer Stütze an einem Trägergestell, insbesondere einer Sattelstütze an einem Zweiradrahmen oder einer Lenkerstütze an einer Radaufhängung eines Zweirads, wobei die Stütze mit einem Ende axial in ein Rohr des Trägergestells einschiebbar ist und Einrichtungen zur Sicherung der Stütze an dem Trägergestell vorgesehen sind, die ein Sicherungselement umfassen, das mit einer am oberen Ende des Rohrs angeordneten Klemmschelle zur Befestigung der Stütze an dem Trägergestell verbindbar ist, in eine in dem Rohr vorgesehene Ausnehmung einsetzbar ist und von dem Rohr nach außen vorsteht.

Aus der DE 10 2004 009 927 A1 des Anmelders, welche als der nächste Stand der Technik angesehen wird und die Präambel offenbart, ist eine solche Vorrichtung bekannt. Die Vorrichtung weist eine mit ihrem dem Sattel abgewandten Ende axial in ein Rohr des Rahmens eingeschoben Sattelstütze auf und ist mit Einrichtungen zur Sicherung der Sattelstütze gegen Drehung um die Rohrachse versehen, welche eine an der Stütze oder dem Rohr gebildete Längsnut und eine in die Längsnut eingreifende Nase an dem Rohr bzw. der Sattelstütze umfassen. Die Nase ist an einer mit dem Rohr um die Rohrachse drehfest verbindbaren, in das Rohr einschiebbaren Hülse gebildet. Ein an der Sattelstütze vorgesehener Anschlag verhindert eine Loslösung der Sattelstütze vom Rahmenrohr. Die Hülse ist mit einer Bohrung zur Einführung eines durch die Wand des Rohres geführten Arretierungselements versehen, die nahe dem oberen Ende der Hülse angeordnet ist. Das Arretierungselement ist zusätzlich durch eine Bohrung in einer am oberen Ende des Rohrs angeordneten Klemmschelle zur Klemmbefestigung der Sattelstütze im Rohr geführt und die Klemmschelle dadurch gegen Drehung gesichert.

Die DE 44 10 523 A1 beschreibt eine Diebstahlsicherungseinrichtung für Sättel von Fahrrädern, die eine Sattelstütze und eine Hülse umfasst, die gemeinsam in einem Sitzrohr eines Rahmens eines Fahrrades verklemmbar sind. Die Sattelstütze weist eine Führungsnase auf, die in einer Führung der Hülse entlang gleitet, wenn die Sattelstütze in die im Sitzrohr fixierte Hülse eingeführt wird. Da die Führung einen von einer Mantellinie abweichenden Verlauf nimmt, ist eine Montage oder Demontage der Sattelstütze nur bei Kenntnis des Verlaufs der Führung möglich, sodass eine Entwendung des Sattels gemeinsam mit der Sattelstütze erschwert wird.

Der Erfindung liegt die Aufgabe zugrunde, die Vorrichtung der eingangs genannten Art besser gegen Diebstahl zu sichern.

Erfindungsgemäß wird die Aufgabe dadurch gelöst, dass ein Schellenteil der Klemmschelle mit einer entlang seiner Innenseite bogenförmig umlaufenden Nut versehen ist, die zur Aufnahme eines von dem Rohr nach außen vorstehenden Blockierglieds des Sicherungselements vorgesehen ist.

Sitzt das Blockierglied in der Nut, ist zum einen eine Bewegung der Klemmschelle, die vorzugsweise eine Schnellspanneinrichtung aufweist, in Rohrachsrichtung durch das Sicherungselement blockiert, sodass die Klemmschelle in der Rohrachsrichtung nicht vom Rohr abgenommen werden kann, zum anderen ist das Sicherungselement von außen nicht sichtbar und deshalb nicht ohne weiteres erkennbar, dass die Vorrichtung mit dem Sicherungselement versehen ist. Dadurch wird es erheblich erschwert, die Klemmschelle von der Vorrichtung zu entfernen.

Zweckmäßigerweise ist die Nut länger als das Blockierglied in Längsrichtung der Nut, sodass die Klemmschelle bei Anordnung des Blockierglieds in der Nut um die Rohrachse drehbar ist, um sie in eine Arretierposition zu bringen.

Während es vorstellbar wäre, die Nut in dem Schellenteil schraubenlinienförmig vorzusehen, ist sie in einer bevorzugten Ausgestaltung der Erfindung kreisbogenförmig gebildet und parallel zu einem Rand des Schellenteils angeordnet. Sie ist zweckmäßigerweise nur über einen Teil eines Kreises, vorzugsweise aber zumindest über einen Viertelkreis, besonders bevorzugt über zumindest einen Halbkreis, gebildet.

In einer Ausgestaltung der Erfindung ist die Nut vor der Arretierposition verengt, sodass zur Bewegung der Klemmschelle in die Arretierposition ein mechanischer Widerstand überwunden werden muss. Dieser mechanische Widerstand lässt einerseits erkennen, dass bei der Montage die Arretierposition erreicht ist, andererseits erschwert es ein Bewegen der Klemmschelle aus der Arretierposition und bildet dadurch einen weiteren Diebstahlschutz. Die Verengung der Nut ist vorzugsweise durch eine Erhöhung des Nutenbodens gebildet. Vorstellbar wäre aber auch, an zumindest einer der Nutenwände eine Verdickung vorzusehen.

In einer besonders bevorzugten Ausführungsform der Erfindung, die die Variante mit der Erhöhung in dem Nutenboden betrifft, weist die Erhöhung eine derartige Höhe auf, dass die Klemmschelle nur dann über die Erhöhung bewegt werden kann, wenn sie gleichzeitig mittels eines Werkzeugs zur Vergrößerung ihres Innendurchmessers an den gegenüberliegenden Enden des Schellenteils auseinander gedrückt wird. Zweckmäßigerweise ist die Erhöhung derart hoch gebildet, dass sie bei Drehung das Blockierglied zwar überwinden kann, wenn das Schellenteil mittels des Werkzeugs derart weit auseinander gedrückt ist, dass der Innendurchmesser über denjenigen hinausgeht, den das Schellenteil einnimmt, wenn die Schnellspanneinrichtung an dem Schellenteil angelegt ist und ein Klemmhebel der Schnellspanneinrichtung geöffnet ist; bei Einnahme des Innendurchmessers bei angelegter und geöffneter Schnellspanneinrichtung aber soll sich die Klemmschelle sich nicht über das Blockierglied hinwegdrehen lassen.
Vorteilhaft lässt sich die Klemmschelle dann nur unter Zuhilfenahme des Werkzeugs aus der Arretierposition bewegen, sodass eine Lösung der Klemmschelle von der Vorrichtung noch weiter erschwert ist.

In einer weiteren Ausgestaltung der Erfindung ist in Richtung senkrecht zu der Nut zu einem Rand des Schellenteils hin zumindest an einer Stelle eine Nutabzweigung gebildet, die als die Arretierposition dienen kann. Vorteilhaft lässt sich die Klemmschelle, wenn das Blockierglied in der Nutabzweigung angeordnet ist, nicht um die Rohrachse drehen, sodass es weiter erschwert ist, die Klemmschelle aus der Arretierposition zu bewegen.

Zweckmäßigerweise ist auf der Innenseite des Schellenteils eine von einem Rand des Schellenteils zu der Nut führende Aussparung gebildet, sodass die Klemmschelle unter Führung des Blockierglieds durch die Aussparung auf den vorstehenden Teil aufsetzbar ist.

In einer besonders bevorzugten Ausführungsform der Erfindung ist das Sicherungselement ferner zum unmittelbaren Zusammenwirken mit der Stütze vorgesehen. Zur Sicherung der Stütze gegen Drehung um die Rohrachse ist auf der Außenseite der Stütze zweckmäßigerweise eine Längsnut gebildet und ein von dem Rohr nach innen vorstehendes Führungsglied des Sicherungselements zum Eingriff in die Längsnut vorgesehen. Der Sattel bzw. der Lenker braucht nicht nach Augenmaß neu ausgerichtet zu werden, sondern verbleibt während der Verstellung der Stütze in der korrekten Drehposition. Ungewollte Verdrehungen z.B. des Sattels oder des Lenkers während der Verschiebung der Stütze und damit eine unbeabsichtigte oder unsachgemäße Verstellung werden vermieden.

In der Längsnut ist in einer Ausführungsform der Erfindung ein Anschlag für das Führungsglied gebildet, der die Stütze gegen Herausziehen aus dem Rohr blockiert.
Der bei Haltevorrichtungen nach dem Stand der Technik häufig auftretende Fall, dass die Stütze beim Verstellen der Sattelhöhe versehentlich aus dem Rohr herausgezogen wird und oft mit erheblicher Mühe wieder eingeführt werden muss, kann nicht eintreten. Der Anschlag dient ferner der Diebstahlsicherung.
Zweckmäßig hat bei Anlage des Führungsglieds gegen den Anschlag das Ende der Stütze von der Eintrittsöffnung der Stütze einen ausreichend großen Abstand, so dass die minimale Einstecklänge der Stütze in das Rohr groß genug ist, um eine stabile Verbindung von Stütze und Rohr erreichen zu können. Der Abstand beträgt vorzugsweise mindestens 80 mm.
Zwischen dem Führungsglied und dem Anschlag kann ein Dämpfungselement angeordnet sein, um mechanische Belastungen der Vorrichtung beim Anschlagen des Führungsglieds am Anschlagelement zu vermeiden. Das Dämpfungselement, das vorzugsweise aus einem elastischen Kunststoff, bspw. einem Weichschaum aus Polyurethan, gebildet ist, ist dazu zweckmäßigerweise am Führungsglied und/oder am Anschlag angeordnet.
Zweckmäßigerweise weist das Dämpfungselement eine derartige Form auf, dass es die Längsnut vollständig ausfüllt. Dadurch wird das Eindringen von Feuchtigkeit, insbesondere von Spritz- oder Regenwasser, in das Trägergestell vermieden oder erschwert. Das Dämpfungselement ist dazu bevorzugt an dem Führungsglied angeordnet und kann ggf. auch auf der Seite des Führungsglieds, die dem Ende des Rohrs zugewandt ist, in dem die Stütze angeordnet ist, vorgesehen sein.
Das Dämpfungselement kann ferner derart vorgesehen sein, dass es unter Bildung eines Reibschlusses an der Stütze anliegt derart, dass die Stütze, wenn keine externe Kraft auf sie ausgeübt wird, nicht in dem Rohr verrutscht. Eine versehentliche Verstellung der Höhe der Stütze bei Öffnung der Klemmschelle wird vermieden und damit die Handhabung der Vorrichtung erheblich vereinfacht. Es versteht sich, dass der Reibschluss derart vorgesehen wird, dass die Kraft zur Überwindung der Haftreibung so gering ist, dass sich die Stützte von Hand ohne weiteres verstellen lässt.

In einer weiteren Ausführungsform der Erfindung ist das Sicherungselement zum Zusammenwirken mit einer in das Rohr einsetzbaren Hülse, die zur Aufnahme der Stütze eingerichtet ist, vorgesehen. Zweckmäßigerweise ist auf der Außenseite der Hülse eine Bohrung gebildet, in die zur Halterung der Hülse in einer festen Position an dem Rohr ein in den Rohrinnenraum vorstehendes Halterungsglied des Sicherungselements einsetzbar ist. Durch das Sicherungselement wird die Hülse an dem Rohr festgehalten und in ihrer Funktionsposition blockiert und darüber hinaus gegen Diebstahl gesichert.
Vorzugsweise weist die Hülse einen Längsschlitz auf, sodass sie sich elastisch an die Innenwand des Rohrs bzw. an die Außenwand der Stütze anlegen und damit besonders einfach an den Durchmesser des Rohrs, in das die Hülse einzusetzen ist, angepasst werden kann. Der Schlitz kann über die gesamte Länge der Hülse oder nur über einen Teilabschnitt der Länge der Hülse vorgesehen sein.

In einer Weiterbildung der Erfindung ist die Hülse zur im Verhältnis zur Rohrachse exzentrischen Aufnahme der Stütze eingerichtet und an dem in das Rohr einzusetzenden Ende der Stütze ein Anschlagelement angeordnet, das zur zumindest teilweisen Anlage an einer Innenfläche des Rohrs vorgesehen ist. Vorstellbar ist beispielsweise, dass das Anschlagelement eine derartige Form aufweist, dass es genau in das Rohr hinein passt und mit seinen Außenseiten an der Rohrinnenseite anliegt.
Um zu verhindern, dass die Stütze aus dem Rohr herausgezogen werden kann, steht das Anschlagelement zweckmäßigerweise von der Stütze bezogen auf deren Längsachse radial nach außen vor.
Zweckmäßig hat auch bei Anlage des Anschlagelements gegen die Hülse das Ende der Stütze von der Eintrittsöffnung der Stütze einen ausreichend großen Abstand, so dass die minimale Einstecklänge der Stütze in das Rohr groß genug ist, um eine stabile Verbindung von Stütze und Rohr erreichen zu können, wobei der Abstand vorzugsweise mindestens 80 mm beträgt.
Zur Vermeidung mechanischer Belastungen der Vorrichtung beim Anschlagen des Anschlagelements an der Hülse kann zwischen der Hülse und dem Anschlagelement ein Dämpfungsglied vorgesehen sein, das vorzugsweise an der Hülse und/oder an dem Anschlagelement angeordnet ist. Das Dämpfungsglied ist zweckmäßigerweise aus einem elastischen Kunststoff, bspw. einem Weichschaum aus Polyurethan, gebildet.

In einer Ausführungsform der Erfindung ist das Anschlagelement fest mit der Stütze verbunden, sodass es eine Drehung der Stütze um ihre Längsachse blockiert. Wie oben bereits für die mit der Längsnut versehene Stütze beschrieben, können dadurch ungewollte Verdrehungen bei Verstellung der Stütze vermieden werden.

In einer weiteren Ausführungsform der Erfindung ist in der Stütze ein Innengewinde gebildet und in dem Innengewinde eine Schraube angeordnet, die fest mit dem Anschlagelement oder mit einem Verstellglied verbunden ist, das zum Zusammenwirken mit einem Gegenhalter für das Verstellglied eingerichtet ist. Der Gegenhalter ist zweckmäßigerweise an der Hülse vorgesehen, vorzugsweise an dem Ende der Hülse, an dem das Innengewinde gebildet ist. Bei Verdrehung der Sattelstütze wird die Schraube durch das Anschlagelement durch Anlage an dem Rohr bzw. das von dem Gegenhalter gehaltene Verstellglied zurückgehalten und dreht sich nicht mit, verschiebt sich in der Stütze aber unter der Drehung der Stütze.
Ist in der Stütze, wie herkömmlich beispielsweise zur Federung eines Sattels bekannt, ein Federelement angeordnet, das sich einerseits an der Schraube und andererseits an dem Teil, das die Stütze trägt, bspw. dem Sattel oder dem Lenker, abstützt, kann durch Drehung der Stütze um ihre Längsachse und dabei Verschiebung der Schraube in dem Innengewinde die Vorspannung des Federelements und damit die Stärke der Federung des Teils verstellt werden. Im Vergleich zu den herkömmlichen Einrichtungen zur Verstellung der Stärke der Federung, zu deren Betätigung stets Werkzeuge benutzt werden und die jeweiligen Vorrichtungen auseinander gebaut werden müssen, vereinfacht sich die Verstellung mittels der erfindungsgemäßen Vorrichtung erheblich.
Zeckmäßigerweise ist in dem Innengewinde ein Drehsicherungselement, vorzugsweise ein Sprengring, vorgesehen, das ein Herausdrehen der Schraube aus der Stütze verhindert.

Es versteht sich, dass die Hülse und die zugehörige Stütze mit dem Anschlagelement oder dem Verstellglied vorteilhaft auch bei Vorrichtung zum Halten einer Stütze an einem Trägergestell verwendet werden kann, die nicht die oben beschriebene Klemmschelle und das Sicherungselement aufweisen, sondern in herkömmlicher Weise befestigt werden.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine erfindungsgemäße Vorrichtung im Schnitt,
- Fig. 2: ein Teil der erfindungsgemäßen Vorrichtung nach Fig. 1 in verschiedenen Ansichten,
- Fig. 3: ein Teil der erfindungsgemäßen Vorrichtung nach Fig. 1 in verschiedenen Ansichten,
- Fig. 4: ein Teil der Vorrichtung nach Fig. 1 in Draufsicht,
- Fig. 5: ein weiteres Teil der Vorrichtung nach Fig. 1 in Seitenansicht,
- Fig. 6: ein weiteres Teil der Vorrichtung nach Fig. 1 in Seitenansicht,
- Fig. 7: eine weitere erfindungsgemäße Vorrichtung im Schnitt,
- Fig. 8: ein Detail der Vorrichtung nach Fig. 7 in Querschnitt,
- Fig. 9: ein Teil der Vorrichtung nach Fig. 7 in isometrischer Darstellung,
- Fig. 10: ein Detail der erfindungsgemäßen Vorrichtung,
- Fig. 11: ein weiteres Detail der erfindungsgemäßen Vorrichtung,
- Fig. 12: ein Teil einer weiteren erfindungsgemäßen Vorrichtung, und
- Fig. 13: ein Teil einer weiteren erfindungsgemäßen Vorrichtung.

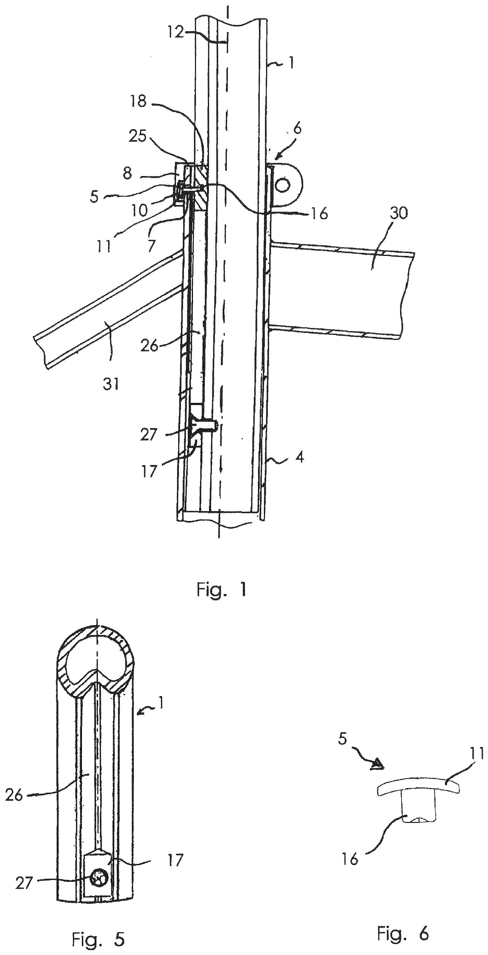

Fig. 1 zeigt einen Teil eines Fahrradrahmens mit miteinander verbundenen Rahmenrohren 4,30,31, wobei im Rahmenrohr 4 eine Sattelstütze 1 angeordnet ist, die mit ihrem einem (nicht gezeigten) Sattel abgewandten Ende voran über einen Teil ihrer Länge in das Rahmenrohr 4 eingesetzt ist.

Wie insbesondere aus Fig. 5 hervorgeht, weist die selbst als Rohr ausgebildete Sattelstütze 1 eine Längsnut 26 auf. Nahe dem unteren Ende der Sattelstütze 1 ist in der Längsnut 26 ein im Querschnitt etwa dreieckiger Block 17 angeordnet und mit Hilfe einer Schraube 27 an der Sattelstütze 1 befestigt.

In der Nähe des oberen Randes des Rahmenrohrs 4 ist in dem Rahmenrohr 4 eine Bohrung 7 zur Aufnahme eines im Detail in Fig. 6 dargestellten Sicherungselements 5, das ein auf der Rohraußenseite aufzulegendes Blockierglied 11 und ein in die Rohrinnenseite vorstehendes Führungsglied 16 aufweist.

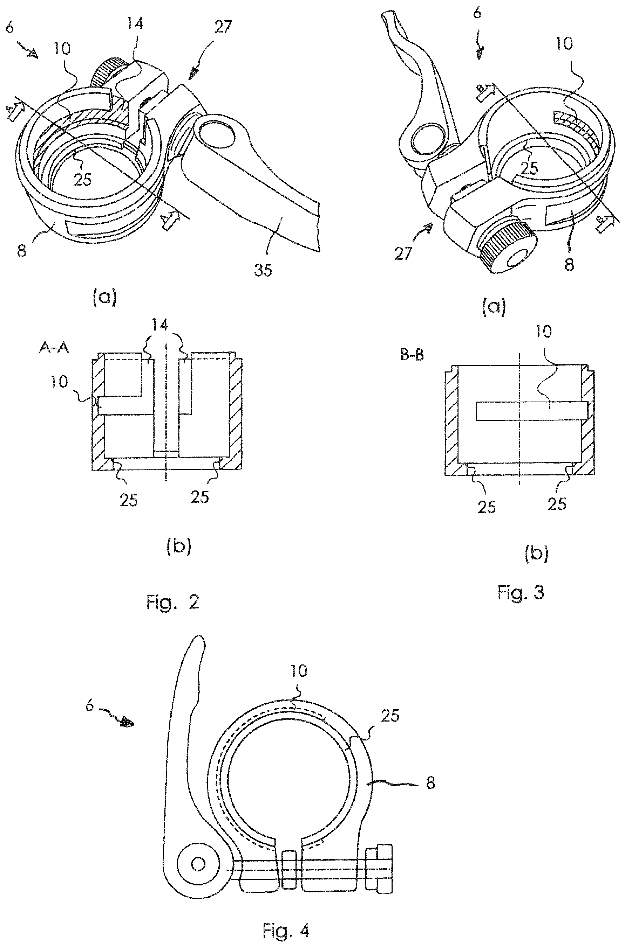

Auf das dem Sattel zugewandte Rohrende des Rahmenrohrs 4 ist eine Klemmschelle 8 mit einem Schellenteil 8 und einer den Schellenteil 8 einschnürenden Schnellspanneinrichtung 27 aufgesetzt. Der Schellenteil 6 weist einen nach innen vorstehenden Kragen 25 auf, welcher das Ende des Rahmenrohrs 4 übergreift. Wie den Figuren 2 bis 4 zu entnehmen ist, ist an der Klemmschelle 8 kreisbogenförmig eine Nut 10 gebildet, die von der der Schnellspanneinrichtung 27 zugewandten Seite aus kreisbogenförmig über etwas mehr als einen Halbkreis an der Innenseite 9 des Schellenteils 8 umlaufend gebildet ist.

Wie aus Fig. 2a hervorgeht, die die Klemmschelle 8 in Ansicht von unten zeigt, ist auf der der Schnellspanneinrichtung 27 zugewandten Seite des Schellenteils 8 eine von der im Kragen 9 abgewandten Unterseite des Schellenteils eine zu der Nut 10 führende Aussparung 14 vorgesehen.
Die Nut 10 weist eine derartige Größe auf, dass sie das Blockierglied 11 des Sicherungselements 5, wenn es auf dem Rohr 4 aufsitzt, vollständig aufnehmen kann. Um das Blockierglied 11 herum kann ein Dämpfungselement 18 aus Polyurethanschaum angeordnet sein, das neben einer Dämpfungsfunktion beim Anschlagen des Blocks 17 am Blockierglied 11 die Längsnut 26 nach oben hin gegen Eindringen von Wasser schützt.

Zur Montage der Vorrichtung wird zunächst die Stütze 1 in das Rahmenrohr 4 eingesetzt und anschließend das Sicherungselement 5 mit dem Führungsglied 16 in die Bohrung 7 eingesteckt. Danach wird die Klemmschelle 8 auf das obere Ende des Rahmenrohrs 4 derart aufgeschoben, dass die Aussparung 14 über das Blockierglied 11 bewegt wird, bis das Blockierglied 11 auf Höhe der Nut 10 in der Aussparung 14 sitzt. Dann wird die Klemmschelle 6 um eine Längsachse 12 des Rahmenrohrs 4 um etwa 180 ° gedreht. In einer dann erreichten Arretierposition wird die Sattelstütze 1 durch Betätigung eines Hebels 35 der Schnellspanneinrichtung 27 festgespannt.

Die erfindungsgemäße Vorrichtung ist aus folgenden Gründen gegen Diebstahl gesichert. Wird versucht, die Sattelstütze 1 aus dem Rahmenrohr 4 zu ziehen, nachdem die Klemmschelle 6 geöffnet worden ist, schlägt der Anschlag 17, ggf. das Dämpfungselement 18, an dem Führungsglied 16 an, sodass das Herausziehen verhindert wird. Darüber hinaus lässt sich die Klemmschelle 6 nicht nach oben hin von dem Rahmenrohr 4 abziehen, da das Blockierglied 11 durch seinen Sitz in der Nut 10 eine Bewegung nach oben verhindert. Da das Sicherungselement 5 von außen nicht sichtbar ist, ist nicht ohne Weiteres erkennbar, wie die Sattelstütze 1 und die Klemmschelle 6 an dem Rahmenrohr befestigt sind.

Darüber hinaus bleibt bei einer Verschiebung der Sattelstütze zur Verstellung der Sitzhöhe der Sattel in Bezug auf die Längsrichtung des Fahrrads stets korrekt ausgerichtet, da das in die Längsnut 26 eingreifende Führungsglied 16 eine Drehung der Sattelstütze 1 um ihre Achse verhindert. Ferner kann es wegen des Anschlags 17 auch nicht dazu kommen, dass die Sattelstütze 1 versehentlich vollständig aus dem Rahmenrohr 4 herausgezogen wird.

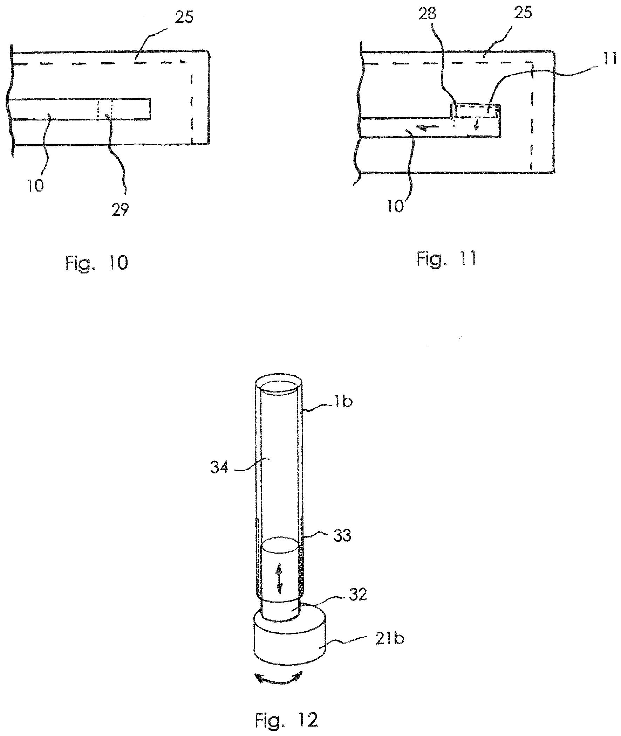

Wie Fig. 10 zeigt, kann der Boden der Nut 10 an einer Stelle vor der Arretierposition mit einer Materialverstärkung versehen sein, die auf dem Boden eine Schwelle 29 bildet. Dadurch ist beim Drehen der Klemmschelle vor Erreichen der Arretierposition ein mechanischer Widerstand spürbar, der zum einen erkennen lässt, dass die Arretierposition erreicht ist, zum anderen auch einen Widerstand beim Lösen der Klemmschelle bildet, der dem Diebstahlschutz dient.

Bei dem Ausführungsbeispiel nach Fig. 11 ist am Ende der Nut 10 eine Nutabzweigung 28 in Richtung hin zum Kragen 25 gebildet, in die sich das Blockierelement 11 durch Schieben der Klemmschelle 6 auf dem Rahmenrohr 4 nach unten bewegen lässt. Da sich die Klemmschelle 6 bei Anordnung des Blockierelements 11 in der Nutabzweigung 28 nicht mehr um die Rohrachse 12 drehen lässt, ist das Lösen der Klemmschelle 6 von dem Rahmenrohr 4 weiter erschwert.

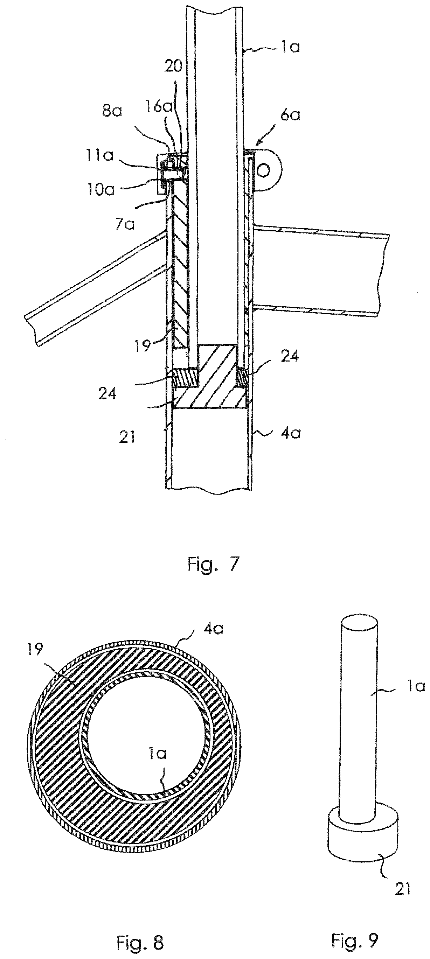

Eine weitere in Fig. 7 gezeigte erfindungsgemäße Vorrichtung unterscheidet sich von derjenigen nach Fig. 1 durch eine in ein Rahmenrohr 4a eingesetzte Hülse 19, in der eine Sattelstütze 1a angeordnet ist und ferner dadurch, dass ein Sicherungselement 5a nicht unmittelbar mit der Stütze 1a, sondern mit der Hülse 19 zusammenwirkt.

Zur Befestigung der Hülse 19 ist diese mit einer Bohrung 20 versehen, in die ein Halterungsglied 16a des Sicherungselements 5a vorsteht. Wird eine Klemmschelle 6a wie oben für die Vorrichtung gemäß Fig. 1 bis 6 beschrieben auf das Rahmenrohr 4a aufgespannt, ist die Hülse 19 am Rahmenrohr 4a gesichert.
Darüber hinaus ist die Sattelstütze 1a durch ein Anschlagelement 21, das am Ende der Sattelstütze 1a befestigt ist, gegen Verdrehen im Rahmenrohr 4a und gegen Herausziehen aus dem Rahmenrohr gesichert. Auf dem Anschlagelement 21 ist ein Dämpfungsglied 24 angeordnet, das ggf. auftretende mechanische Belastungen zwischen dem Anschlagelement 21 und dem unteren Ende der Hülse 19 abfedert.

Wie anhand der Fig. 8 erkennbar ist, ist die Hülse 19 derart gebildet, dass sie die Sattelstütze 1a exzentrisch zu der Längsachse 12a des Rohrs 4a aufnimmt. Da das Anschlagelement 21, wie insbesondere den Figuren 7 und 9 zu entnehmen ist, eine derartige Größe aufweist, dass es mit seinen äußeren Seiten genau in das Rohrinnere des Rahmenrohrs 4a passt und fest mit der Sattelstütze 1a verbunden ist, ist die Sattelstütze 1a nicht um ihre eigene Längsachse verdrehbar, sodass die Sattelstütze 1a bei einer Höhenverstellung stets in gleicher Richtung ausgerichtet bleibt. Die Sattelstütze 1a muss deshalb nicht mit der oben für die Sattelstütze 1 beschriebenen Längsnut versehen sein, sondern kann eine kreisrunde Querschnittsform aufweisen. Ferner schlägt das Anschlagelement 21 an der Hülse 19 an, wenn die Sattelstütze 1a nach oben bewegt wird, und verhindert, dass die Sattelstütze 1a vollständig aus dem Rahmenrohr 4a gezogen werden kann.

Fig. 12 zeigt eine Sattelstütze 1b einer weiteren erfindungsgemäßen Vorrichtung, in der ein Federelement 34 angeordnet ist, das als Federung für einen hier nicht gezeigten Sattel dient. Das Federelement 34 stützt sich mit ihrem einen Ende an einem hier nicht gezeigten, mit dem Sattel verbundenen Teil ab und sitzt mit ihrem anderen Ende auf einer Schraube 32, die in einem Innengewinde 33 der Sattelstütze 1b angeordnet ist, welches auf der dem Sattel abgewandten Seite der Stütze 1b vorgesehen ist. Die Schraube 32 ist fest mit einem Anschlagelement 21b verbunden. Die Sattelstütze 1b und das Anschlagelement 21b samt Schraube 32 sind in gleicher Weise wie die Sattelstütze 1a und das Anschlagelement 21 in einer Hülse in einem Rohr angeordnet, wie dies in Fig. 7 gezeigt ist. Zur Verstellung der Vorspannung, die die Schraube 32 auf das Federelement 34 ausübt, wird die Sattelstütze 1b in der Hülse bzw. dem Rohr um ihre Längsachse gedreht. Dabei ändert sich die Position der Schraube 32 in dem Innengewinde 33, sodass sich je nach Drehrichtung die Vorspannung des Federelements 34 verringert oder vergrößert. In dem Innengewinde 33 kann ein hier nicht gezeigtes Drehsicherungselement vorgesehen sein, das ein Herausdrehen der Schraube 32 aus dem Innengewinde 33 verhindert. Das Drehsicherungselement kann durch einen in dem Innengewinde vorzusehenden Sprengring oder durch eine Schraube gebildet sein, die in einer Bohrung angeordnet ist, die in dem Rohr im Bereich auf Höhe des Innengewindes vorgesehen ist. Auch auf dem Anschlagelement 21b kann ein Dämpfungsglied (wie in Fig. 7 gezeigt) vorgesehen sein.

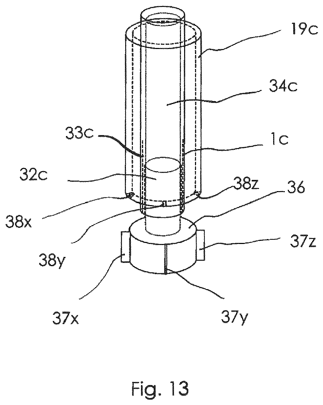

In Fig. 13 ist eine weitere erfindungsgemäße Vorrichtung dargestellt, die eine Sattelstütze 1c umfasst, in der, in gleicher Weise wie oben für Fig. 12 beschrieben, eine Schraube 32c und ein Federelement 34c angeordnet sind. Abweichend von dem Ausführungsbeispiel nach Fig. 12 ist mit der Schraube 32c ein zylindrisches Verstellglied 36 verbunden, auf dessen Mantelfläche abstehend Stege 37x,37y,37z angeordnet sind. An einer die Sattelstütze 1c konzentrisch aufnehmenden Hülse 19c sind an der Unterseite passend zu den Stegen 37x,37y,37z Einkerbungen 38x,38y,38z vorgesehen, in die die Stege 37x,37y,37z eingesetzt werden können, um eine Verdrehung des Verstellglieds 36 gegenüber der Hülse 19c zu blockieren. Wird die Sattelstütze 1c mit dem Verstellglied 36 in der Hülse 19c nach oben gezogen, derart an der Unterseite der Hülse 19c angeordnet, dass die Stege 37x,37y,37z in den Einkerbungen 38x,38y,38z sitzen und dabei die Sattelstütze 1c um ihre Längsachse gedreht, verändert sich die Position der Schraube 32c in der Sattelstütze 1c. Dadurch kann eine Vorspannung, mit der das Federelement 34c in der Sattelstütze sitzt, verändert werden. In dem Innengewinde 33c kann ein hier nicht gezeigtes Drehsicherungselement vorgesehen sein, das ein Herausdrehen der Schraube 32c aus dem Innengewinde 33c verhindert. Das Drehsicherungselement kann durch einen in dem Innengewinde vorzusehenden Sprengring oder durch eine Schraube gebildet sein, die in einer Bohrung angeordnet ist, die in dem Rohr im Bereich auf Höhe des Innengewindes vorgesehen ist.

Es versteht sich, dass die oben für eine Sattelstütze beschriebene Vorrichtung auch für andere Stützen verwendbar ist, beispielsweise für eine Stütze eines Lenkrads eines Fahrrads oder eines anderen Zweirads. Die Vorrichtung ist im letztgenannten Fall zweckmäßigerweise in einem Gabelschaft einer Radaufhängung angeordnet. Ferner versteht sich, dass die oben beschriebene Klemmschelle nicht mit der Schnellspanneinrichtung versehen sein muss. Anstatt der Schnellspanneinrichtung könnte auch eine herkömmliche Befestigung mit Schraube und Mutter vorgesehen sein.

## Patentansprüche

1. Vorrichtung zum Halten einer Stütze (1,1a) an einem Trägergestell (2), insbesondere einer Sattelstütze an einem Zweiradrahmen oder einer Lenkerstütze an einer Radaufhängung eines Zweirads, wobei die Stütze (1,1a) mit einem Ende (3) axial in ein Rohr (4,4a) des Trägergestells (2) einschiebbar ist und Einrichtungen (5, 6, 7,8) zur Sicherung der Stütze (1,1a) an dem Trägergestell (2) vorgesehen sind, die ein Sicherungselement (5,5a) umfassen, das mit einer am oberen Ende des Rohrs (4,4a) angeordneten Klemmschelle (6,6a) zur Befestigung der Stütze (1,1a) an dem Trägergestell (2) verbindbar ist, in eine in dem Rohr (4,4a) vorgesehene Ausnehmung (7) einsetzbar ist und von dem Rohr (4,4a) nach außen vorsteht,
**dadurch gekennzeichnet,**
**dass** ein Schellenteil (8) der Klemmschelle (6,6a) mit einer entlang seiner Innenseite (9) bogenförmig umlaufenden Nut (10) versehen ist, die zur Aufnahme eines von dem Rohr (4,4a) nach außen vorstehenden Blockierglieds (11) des Sicherungselements (5,5a) vorgesehen ist.

2. Vorrichtung nach Anspruch 1,
**dadurch gekennzeichnet**,
das die Nut (10) länger ist als das Blockierglied (11) in Längsrichtung der Nut (10), sodass die Klemmschelle (6,6a) bei Anordnung des Blockierglieds (11) in der Nut (10) um die Rohrachse (12) drehbar ist.

3. Vorrichtung nach Anspruch 1 oder 2,
**dadurch gekennzeichnet,**
**dass** auf der Innenseite (9) des Schellenteils (8) eine von einem Rand (13) des Schellenteils (8) zu der Nut (10) führende Aussparung (14) gebildet ist, sodass das Schellenteil (8) unter Führung des Blockierglieds (11) durch die Aussparung (14) auf das Blockierglied (11) aufsetzbar ist.

4. Vorrichtung nach Anspruch 3,
**dadurch gekennzeichnet,**
**dass** zur Sicherung der Stütze (1) gegen Drehung um ihre Längsachse auf der Außenseite der Stütze (1) eine Längsnut (15) gebildet ist und ein von dem Rohr (4) nach innen vorstehendes Führungsglied (16) des Sicherungselements (5) zum Eingriff in die Längsnut (15) vorgesehen ist.

5. Vorrichtung nach Anspruch 4,
**dadurch gekennzeichnet,**
**dass** in der Längsnut (15) ein Anschlag (17) für das Führungsglied (16) gebildet ist, der die Stütze (1) gegen Herausziehen aus dem Rohr (4) blockiert, wobei vorzugsweise zwischen dem Anschlag (17) und dem Führungsglied (16) ein Dämpfungselement (18) angeordnet ist.

6. Vorrichtung nach einem der Ansprüche 1 bis 3,
**dadurch gekennzeichnet,**
**dass** das Sicherungselement (5,5a) zum Blockieren einer in das Rohr (4,4a) einsetzbaren Hülse (19), die zur Aufnahme der Stütze (1a) eingerichtet ist, vorgesehen ist.

7. Vorrichtung nach Anspruch 6,
**dadurch gekennzeichnet,**
**dass** auf der Außenseite der Hülse (19) eine Bohrung (20) gebildet ist, in die zur Befestigung der Hülse (19) an dem Rohr (4a) ein in einen Innenraum des Rohrs (4a) vorstehendes Halterungsglied (16a) des Sicherungselements (5) einsetzbar ist.

8. Vorrichtung nach Anspruch 6 oder 7,
**gekennzeichnet durch** eine in das Rohr (4a) einsetzbare Hülse (19), die zur Aufnahme der Stütze (1a, 1b) eingerichtet ist.

9. Vorrichtung nach Anspruch 8,
**dadurch gekennzeichnet,**
**dass** die Hülse (19) zur im Verhältnis zur Rohrachse (12) exzentrischen Aufnahme der Stütze (1a, 1b) eingerichtet ist und an dem in das Rohr (4a) einzusetzenden Ende (20) der Stütze (1a, 1b) ein Anschlagelement (21,21b) angeordnet ist.

10. Vorrichtung nach Anspruch 9,
**dadurch gekennzeichnet,**
**dass** das Anschlagelement (21) fest mit der Stütze (1a) verbunden ist, sodass es eine Drehung der Stütze (1) um deren Längsachse (23) blockiert.

11. Vorrichtung nach Anspruch 8 oder 9,
**dadurch gekennzeichnet,**
**dass** in der Stütze (1b) ein Innengewinde (33) gebildet ist und dem Innengewinde (33) eine Schraube (32) angeordnet ist, wobei in der Stütze (1b) vorzugsweise ein Federelement (32) angeordnet ist, dessen Vorspannung unter Verstellung der Position des Schraube (32) in dem Innengewinde (33) verstellbar ist.

12. Vorrichtung nach Anspruch 11,
**dadurch gekennzeichnet,**
**dass** die Schraube (32, 32c) fest mit dem Anschlagelement (21b) oder mit einem Verstellglied (36,37x,37y,37z) verbunden ist, das zum Zusammenwirken mit einem Gegenhalter (38x,38y,38z) für das Verstellglied (36,37x,37y,37z) eingerichtet ist, der an dem Ende der Hülse (19c) angeordnet ist, an dem das Innengewinde gebildet ist.

## Claims

1. Device for holding a support (1, 1a) on a supporting frame (2), in particular a saddle pillar on a cycle frame, or a handlebar pillar on a wheel suspension of a cycle, wherein the support (1, 1a) can be pushed axially at one end (3) into a tube (4,4a) of the supporting frame (2), and devices (5,6,7,8) are provided for securing the support (1, 1a) on the supporting frame (2), the devices comprising a securing element (5,5a) which is connectable to a clamping clip (6,6a) arranged at the upper end of the tube (4,4a) for fastening the support (1, 1a) to the supporting frame (2), is insertable into a recess (7) provided in the tube (4,4a) and protrudes outwards from the tube (4,4a), **characterized in that** a clip part (8) of the clamping clip (6, 6a) is provided with a groove (10) which runs along the inner side (9) thereof in an arcuate manner and is provided for receiving a blocking member (11) of the securing element (5,5a), the blocking member protruding outwards from the tube (4,4a).

2. Device according to Claim 1, **characterized in that** the groove (10) is longer than the blocking member (11) in the longitudinal direction of the groove (10), and therefore, when the blocking member (11) is arranged in the groove (10), the clamping clip (6, 6a) is rotatable about the tube axis (12).

3. Device according to Claim 1 or 2, **characterized in that** a cutout (14) leading from an edge (13) of the clip part (8) to the groove (10) is formed on the inner side (9) of the clip part (8), and therefore the clip part (8) can be placed onto the blocking member (11), with the blocking member (11) being guided by the cutout (14).

4. Device according to Claim 3, **characterized in that**, in order to secure the support (1) against rotation about its longitudinal axis, a longitudinal groove (15) is formed on the outer side of the support (1), and a guide member (16) of the securing element (5) that protrudes inwards from the tube (4) is provided for engaging in the longitudinal groove (15).

5. Device according to Claim 4, **characterized in that** a stop (17) for the guide member (16) is formed in the longitudinal groove (15) and blocks the support (1) against being pulled out of the tube (4), wherein a damping element (18) is preferably arranged between the stop (17) and the guide member (16) .

6. Device according to one of Claims 1 to 3, **characterized in that** the securing element (5,5a) is provided for blocking a sleeve (19) which is insertable into the tube (4,4a) and is configured for receiving the support (1a).

7. Device according to Claim 6, **characterized in that** a hole (20) is formed on the outer side of the sleeve (19) and, in order to fasten the sleeve (19) to the tube (4a), a holding member (16a) of the securing element (5) that protrudes into an interior of the tube (4a) is insertable into said hole.

8. Device according to Claim 6 or 7, **characterized by** a sleeve (19) which is insertable into the tube (4a) and is configured for receiving the support (1a, 1b).

9. Device according to Claim 8, **characterized in that** the sleeve (19) is configured for receiving the support (1a, 1b) eccentrically in relation to the tube axis (12), and a stop element (21,21b) is arranged at that end (20) of the support (1a, 1b) which is to be inserted into the tube (4a).

10. Device according to Claim 9, **characterized in that** the stop element (21) is connected fixedly to the support (1a) such that it blocks rotation of the support (1) about the longitudinal axis (23) thereof.

11. Device according to Claim 8 or 9, **characterized in that** an internal thread (33) is formed in the support (1b) and a screw (32) is arranged on the internal thread (33), wherein a spring element (32) is preferably arranged in the support (1b), the pretensioning of which spring element is adjustable by adjusting the position of the screw (32) in the internal thread (33).

12. Device according to Claim 11, **characterized in that** the screw (32,32c) is fixedly connected to the stop element (21b) or to an adjustment member (36,37x,37y,37z) which is configured for interacting with a counterholder (38x,38y,38z) for the adjustment member (36,37x,37y,37z), said counterholder being arranged at that end of the sleeve (19c) at which the internal thread is formed.

## Revendications

1. Dispositif pour maintenir un support (1, 1a) au niveau d'un bâti support (2), en particulier d'un support de selle sur un cadre de deux-roues ou d'un support de guidon au niveau d'une suspension de roue d'un deux-roues, le support (1, 1a) pouvant être inséré avec une extrémité (3) axialement dans un tube (4, 4a) du bâti support (2) et le dispositif pour maintenir le support (1,1a) présentant des dispositifs (5, 6, 7, 8) destinés à fixer le support (1, 1a) au niveau du bâti support (2) qui comprennent un élément de fixation (5, 5a) qui peut être relié à un collier de serrage (6, 6a) agencé au niveau de l'extrémité supérieure du tube (4, 4a) pour la fixation du support (1, 1a) au bâti support (2), qui peut être introduit dans un évidement (7) disposé dans le tube (4, 4a) et qui dépasse vers l'extérieur par rapport au tube (4, 4a), **caractérisé en ce qu'**une partie (8) du collier de serrage (6, 6a) est pourvue d'une rainure (10) qui s'étend en forme d'arc le long de son côté interne (9) et qui est destinée à recevoir un élément de blocage (11) de l'élément de fixation (5, 5a) qui dépasse par rapport au tube (4, 4a).

2. Dispositif selon la revendication 1, **caractérisé en ce que** la rainure (10) est plus longue que l'élément de blocage (11) dans la direction longitudinale de la rainure (10), de telle sorte que le collier de serrage (6, 6a) peut tourner autour de l'axe de rotation (12) lors de la disposition de l'élément de blocage (11) dans la rainure (10).

3. Dispositif selon la revendication 1 ou 2, **caractérisé en ce qu'**un évidement (14), formé sur le côté interne (9) de la partie (8) de collier, conduit d'un bord (13) de la partie (8) de collier à la rainure (10), de telle sorte que la partie (8) de collier peut être placée via l'évidement (14) sur l'élément de blocage (11) avec guidage de l'élément de blocage (11).

4. Dispositif selon la revendication 3, **caractérisé en ce que** pour fixer le support (1) par rapport à une rotation autour de son axe longitudinal, une rainure longitudinale (15) est formée sur le côté externe du support (1) et un élément de guidage (16) de l'élément de fixation (5) qui dépasse vers l'intérieur est destiné à entrer en prise dans la rainure longitudinale (15).

5. Dispositif selon la revendication 4, **caractérisé en ce qu'**une butée (17) pour l'élément de guidage (16) est formée dans la rainure longitudinale (15) et bloque le support (1) contre un retrait hors du tube (4), un élément amortisseur (18) étant de préférence disposé entre la butée (17) et l'élément de guidage (16).

6. Dispositif selon l'une quelconque des revendications 1 à 3, **caractérisé en ce que** l'élément de fixation (5, 5a) est destiné au blocage d'un manchon (19), conçu pour recevoir le support (1a), qui peut être introduit dans le tube (4, 4a).

7. Dispositif selon la revendication 6, **caractérisé en ce qu'**un trou (20) est réalisé sur le côté externe du manchon (19), dans lequel un élément de maintien (16a) de l'élément de fixation (5) qui dépasse dans l'espace interne du tube (4a) peut être introduit pour la fixation du manchon (19) au niveau du tube (4a).

8. Dispositif selon la revendication 6 ou 7, **caractérisé par** un manchon (19), conçu pour recevoir le support (1a, 1b), pouvant être introduit dans le tube (4a).

9. Dispositif selon la revendication 8, **caractérisé en ce que** le manchon (19) est conçu pour un logement excentrique par rapport à l'axe de rotation (12) du support (1a, 1b) et un élément de butée (21, 21b) est disposé au niveau de l'extrémité (20) du support (1a, 1b) à introduire dans le tube (4a).

10. Dispositif selon la revendication 9, **caractérisé en ce que** l'élément de butée (21) est relié de manière rigide au support (1a), de manière telle qu'il bloque une rotation du support (1) autour de son axe longitudinal (23).

11. Dispositif selon la revendication 8 ou 9, **caractérisé en ce qu'**un taraudage (33) est formé dans le support (1b) et une vis (32) est disposée dans le taraudage (33), un élément à ressort (32) étant de préférence disposé dans le support (1b), dont la précontrainte est réglable avec réglage de la position de la vis (32) dans le taraudage (33).

12. Dispositif selon la revendication 11, **caractérisé en ce que** la vis (32, 32c) est reliée de manière rigide à l'élément de butée (21b) ou à un élément de réglage (36, 37x, 37y, 37z), qui est conçu pour la coopération avec un contre-support (38x, 38y, 38z) pour l'élément de réglage (36, 37x, 37y, 37z), qui est formé en l'extrémité du manchon (19c) au niveau duquel le taraudage est formé.
